# DEMANDE DE BREVET EUROPEEN

(11) **EP 0 568 436 A1**
(43) Date de publication de la demande: **03.11.1993**
(21) Numéro de dépôt: 93401079.4
(22) Date de dépôt: 26.04.1993
(51) Int. Cl.: F42B 12/36, F41J 2/02, B64D 1/16

(54) **Traceur pyrophorique et drone comportant un tel traceur**

(30) Priorité: 27.04.1992 FR 9205152
(71) Demandeur: ETIENNE LACROIX - TOUS ARTIFICES SA, F-31600 Muret (FR)
(72) Inventeur: Leichter, Geneviève, F-31820 Pibrac (FR)
(74) Mandataire: Martin, Jean-Jacques

(57) **Abrégé**

La présente invention concerne un traceur destiné à être embarqué sur un aéronef pour créer une trace selon la trajectoire de celui-ci, et un drône comportant un tel traceur.

Le traceur (6) comporte un conteneur (14) de composition pyrophorique fluide que des moyens commandés (8, 10, 13, 19, 22) permettent d'expulser coercitivement à l'air libre, par des buses (21) dirigées vers l'arrière en référence à un sens déterminé (3) de vol de l'aéronef. Notamment dans le cas d'un montage sur un drône, le traceur (6) peut être radio-commandé (26, 27, 28).

## Description

La présente invention concerne un traceur, destiné à être embarqué sur un aéronef pour créer une trace le long de la trajectoire de celui-ci et comportant :
- un conteneur destiné à contenir une composition traçante,
- une composition traçante logée dans le conteneur,
- au moins une buse de traçage, raccordée au conteneur et susceptible de déboucher hors de l'aéronef, vers l'arrière en référence à un sens déterminé de vol de celui-ci.

Dans leurs modes de réalisation actuellement connus, de tels traceurs comportent à titre de composition traçante un pain pyrotechnique dont des moyens appropriés initient la combustion et qui, ensuite, émet pendant une durée déterminée par sa masse et sa géométrie un rayonnement de niveau déterminé par sa composition.

En d'autres termes, pour une masse, une géométrie et une composition déterminées du pain pyrotechnique, il n'est possible d'influer ni sur la durée d'émission du rayonnement, ni sur le niveau de ce rayonnement.

Le but de la présente invention est de remédier à ces inconvénients et, à cet effet, la présente invention propose un traceur du type indiqué en préambule, en outre caractérisé en ce que la composition traçante est une composition pyrophorique fluide, en ce que la buse de traçage est une buse d'éjection de la composition pyrophorique à l'air libre, et en ce que sont prévus des moyens commandés d'expulsion, pour expulser coercitivement la composition pyrophorique hors du conteneur, par la buse, de telle sorte qu'elle s'enflamme spontanément en sortant de celle-ci, et des moyens de commande des moyens commandés d'expulsion.

On sait qu'une composition pyrophorique est une composition puissamment réductrice, généralement liquide, qui s'enflamme spontanément au contact de l'air. Ainsi, son expulsion à l'air libre suffit à provoquer son inflammation, sans qu'il soit nécessaire de prévoir de moyens spécifiques aux fins de cette inflammation.

On conçoit aisément que le choix d'une composition pyrophorique fluide, à titre de composition traçante, permette de régler la durée et le niveau d'émission en se prêtant à une commande des débuts et fins d'expulsion, ainsi que du débit d'expulsion.

Notamment selon le type d'aéronef sur lequel est embarqué le traceur, les moyens de commande utilisés à cet effet peuvent être de différents types. Si l'aéronef est un avion, transportant son pilote, les moyens de commande peuvent être intégralement embarqués sur l'aéronef et se présenter sous la forme de moyens de commande manuelle, mis à la disposition du pilote. Si l'aéronef est un drône, c'est-à-dire un aéronef sans pilote volant automatiquement ou de façon radio-commandée depuis le sol, ces moyens de commande peuvent être soit intégralement embarqués, et préréglés avant le décollage quant aux début et fin d'expulsion de la composition pyrophorique à l'air libre, c'est-à-dire quant aux début et fin d'émission d'un rayonnement, et quant au débit d'expulsion, c'est-à-dire quant au niveau du rayonnement, ou encore n'être que partiellement embarqués et comporter dans l'aéronef un récepteur radio et au sol un émetteur radio permettant à un opérateur de commander à volonté les début et fin d'expulsion, ainsi que le débit d'expulsion de la composition pyrophorique à l'air libre, c'est-à-dire le début et la fin d'émission d'un rayonnement ainsi que le niveau de ce rayonnement.

On observera que dans la mesure où il est possible de faire varier le débit d'expulsion de la composition pyrophorique à l'air libre, et d'interrompre puis de reprendre cette expulsion de la composition au cours du vol de l'aéronef, on peut faire varier le niveau de rayonnement en cours d'émission et faire alterner au cours d'un même vol des périodes d'émission d'un rayonnement, avec un niveau qui peut varier notamment d'une période à l'autre, et des périodes d'arrêt d'émission d'un tel rayonnement, ce qui est impossible dans le cas de traceurs à pain pyrotechnique.

Naturellement, la volonté de pouvoir commander l'expulsion de la composition pyrophorique à l'air libre ainsi que des impératifs de sécurité imposent la présence, entre le conteneur et la buse, d'un circuit de raccordement mutuel comportant notamment des moyens de commande de débit, au minimum en tout ou rien et de préférence avec possibilité de réglage ; compte tenu de la tendance, recherchée, de la composition pyrophorique à s'enflammer spontanément au contact de l'air, on prévoit de préférence des moyens de purge, commandés par les moyens de commande, pour purger tout air du circuit de raccordement de la buse au conteneur immédiatement avant d'expulser coercitivement la composition pyrophorique hors du conteneur, par l'intermédiaire de ce circuit. Ces moyens commandés de purge comportent avantageusement un réservoir de gaz inerte sous pression et des moyens, commandés par les moyens de commande, pour introduire le gaz inerte sous pression dans le circuit de raccordement de la buse au conteneur immédiatement avant d'expulser coercitivement la composition pyrophorique hors du conteneur.

Les moyens commandés d'expulsion peuvent comporter eux-mêmes un réservoir de gaz inerte sous pression et des moyens, commandés par les moyens de commande, pour introduire le gaz inerte sous pression dans le conteneur pour en expulser coercitivement la composition pyrophorique ; celle-ci peut être placée au contact direct du gaz inerte à l'intérieur du conteneur, dans la mesure où elle ne risque pas de s'enflammer au contact de ce gaz inerte, mais on peut également prévoir que le conteneur comporte intérieurement des moyens de séparation étanche entre le gaz inerte sous pression et la composition pyrophorique, par exemple sous forme d'une membrane souple ou sous forme d'un piston.

Naturellement, le réservoir de gaz inerte est de préférence unique et commun aux moyens commandés respectivement de purge et d'expulsion, auquel cas il est susceptible d'être raccordé en alternance au circuit à purger et au conteneur, de façon commandée par les moyens de commande.

Un Homme du métier comprendra aisément que l'utilisation d'un gaz inerte sous pression pour expulser coercitivement la composition pyrophorique hors du conteneur, vers la buse d'éjection à l'air libre, offre à la fois toute la sécurité requise en présence d'une composition pyrophorique et toute la souplesse souhaitée quant à la possibilité de commander les débuts et fins d'expulsion de la composition pyrophorique, c'est-à-dire les débuts et fins d'émission d'un rayonnement.

A cet effet, on peut également utiliser des moyens commandés de réglage du débit d'éjection par la buse, fonctionnant au moins en tout ou rien et commandés par les moyens de commande.

Ces moyens commandés de réglage du débit d'éjection par la buse peuvent également être prévus pour fonctionner non seulement en tout ou rien, mais également pour autoriser, de façon commandée, plusieurs débits d'éjection par la buse et permettre ainsi un réglage du niveau d'émission.

A cet effet, toutefois, on préfère prévoir que le traceur comporte la buse en plusieurs exemplaires ainsi que des moyens, commandés par les moyens de commande, pour mettre en service de façon sélective lesdits exemplaires ; cette solution est techniquement plus simple et suffit dans la plupart des cas, dès lors que le nombre d'exemplaires de la buse est suffisant ; à titre d'exemple non limitatif, quatre exemplaires de la buse, mis en service de façon sélective, commandée par les moyens de commande, semblent propres à répondre aux besoins en offrant seize possibilités de débit global d'expulsion, c'est-à-dire de niveau de rayonnement.

Un traceur ainsi conçu conformément à la présente invention se prête particulièrement bien à une utilisation sur aéronef, à savoir sur avion ou sur drône, normalement destiné à revenir au sol sans destruction après chaque mission, et il est de préférence réalisé de façon à être lui-même réutilisable après chaque mission.

A cet effet, on prévoit de préférence que le conteneur soit amovible et interchangeable, ce qui permet d'une part de remplacer entre deux missions un conteneur vide de composition pyrophorique par un conteneur plein d'une telle composition, de façon plus rapide et plus sûre que s'il y avait lieu de remplir le conteneur entre deux missions et de façon plus économique que s'il fallait changer intégralement le traceur, et d'autre part permet de ne mettre en place le conteneur de composition pyrophorique sur le traceur qu'immédiatement avant le décollage, c'est-à-dire de conserver jusqu'à ce moment le conteneur dans des conditions de sécurité optimales sans exposer inutilement l'aéronef aux risques inhérents à la présence d'une composition pyrophorique. Naturellement, le conteneur lui-même comporte dans ce cas toutes les sécurités nécessaires pour éviter un contact accidentel de la composition pyrophorique qu'il contient avec l'air libre.

D'autres caractéristiques et avantages de l'invention ressortiront de la description ci-dessous, relative à un exemple non limitatif de mise en oeuvre, ainsi que des dessins annexés qui font partie intégrante de cette description.
- La figure 1 montre, en élévation latérale, un drône équipé d'un traceur selon l'invention, monté dans une cosse ou "pod", suspendue sous ce drône.
- La figure 2 montre une coupe schématique partielle de cette cosse ou "pod", illustrant le traceur selon l'invention.

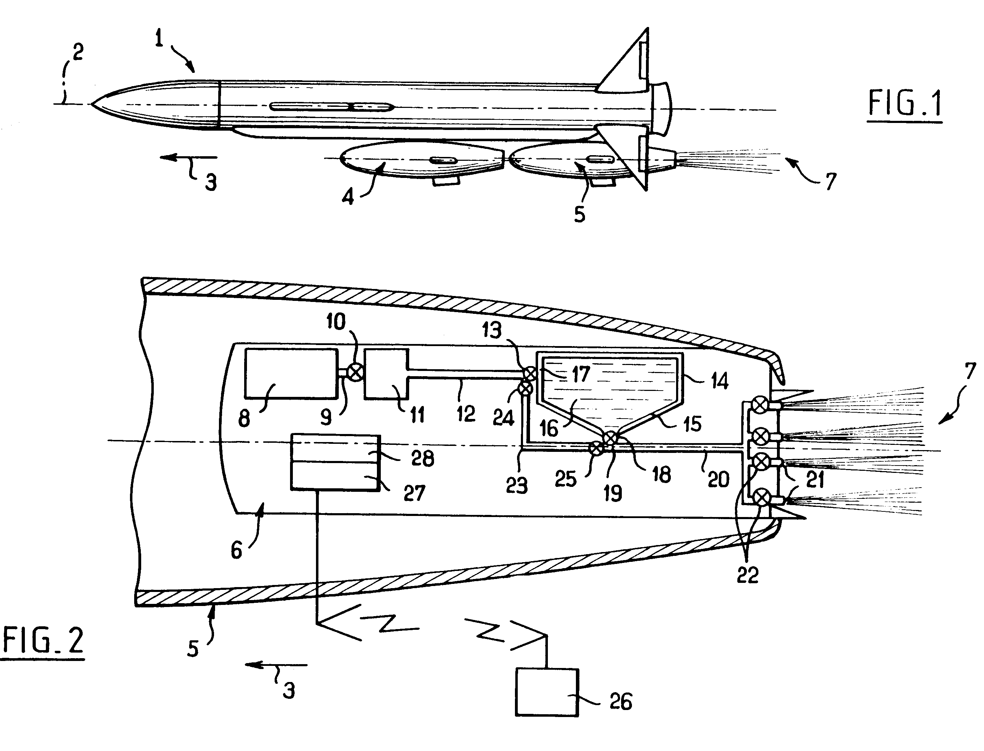

A la figure 1, on a illustré à titre d'exemple non limitatif d'aéronef susceptible d'embarquer un traceur selon l'invention un drône 1 présentant un axe longitudinal 2 et un sens longitudinal de vol 3. Ce drône peut être télécommandé, notamment par radio, ou encore voler automatiquement sous la commande d'un ordinateur embarqué, comme il est connu d'un Homme du métier. Vers le bas, suivant un plan longitudinal de symétrie non représenté, mais constituant le plan de coupe de la figure 2, il porte dans l'exemple illustré deux pods 4, 5 amovibles, et notamment larguables de façon automatique ou radio-commandée en cas d'avarie, et le deuxième de ces pods, décalé vers l'arrière par rapport au premier, contient le traceur 6 selon l'invention, visible à la figure 2 et destiné à émettre vers l'arrière, en référence au sens 3, une trace 7 longeant la trajectoire du drône 1.

Naturellement, un traceur 6 selon l'invention pourrait être intégré directement à un aéronef, que cet aéronef soit constitué par un drône ou qu'il soit d'un type différent, et par exemple constitué par un avion.

Comme le montre la figure 2, le traceur selon l'invention 6, monté à l'arrière du pod 5 ou, dé façon non illustrée, de l'aéronef porteur, comporte un réservoir 8 de gaz inerte sous pression, par exemple de l'azote, qu'une conduite 9 munie d'une vanne 10 commandée en tout ou rien relie à un détendeur 11 qu'une conduite 12 munie d'une vanne 13 également commandée en tout ou rien relie à une entrée 17 d'un conteneur étanche 14, rigide, de préférence à double paroi, doublé intérieurement d'une enveloppe étanche, souple 15, emplie d'une composition pyrophorique 16 fluide, et par exemple liquide. L'enveloppe 15 subdivise de façon étanche l'intérieur du conteneur 14, entre la composition pyrophorique 16 et l'entrée 17 par laquelle on peut introduire dans le conteneur 14 le gaz inerte du réservoir 8 en ouvrant les vannes 10 et 13, mais elle est susceptible de subir une réduction de volume, sous l'effet du gaz inerte ainsi introduit, afin de chasser la composition pyrophorique 16 hors du conteneur 14 ; elle pourrait cependant être supprimée, le gaz inerte agissant alors directement sur la composition pyrophorique 16 à l'intérieur du conteneur 14 lorsque les vannes 10 et 13 sont ouvertes, ou encore être remplacée dans sa fonction d'isolation mutuelle du gaz inerte et de la composition pyrophorique 16 par un piston monté au coulissement étanche à l'intérieur du conteneur 14, alors conformé convenablement d'une façon aisément concevable par un Homme du métier. Dans l'exemple illustré, l'entrée 17 pour le gaz inerte se situe dans une zone supérieure du conteneur 14, si l'on se réfère à une orientation normale du traceur 6 lorsque le drône 1 est en vol, et le conteneur 14 présente la forme générale d'un entonnoir se rétrécissant vers le bas, jusqu'à une sortie 18 pour la composition pyrophorique 16, laquelle sortie 18 communique à l'intérieur du conteneur 14 avec l'intérieur de l'enveloppe 15 lorsqu'une telle enveloppe est prévue, et débouche directement à l'intérieur du conteneur 14 en l'absence d'une telle enveloppe, notamment du côté de l'éventuel piston opposé au côté de ce piston où se situe l'entrée 17. La sortie 18, pour la composition pyrophorique 16, est munie d'une vanne 19 commandée en tout ou rien, qui la raccorde à une conduite 20 menant à au moins une buse 21 d'éjection de composition pyrophorique débouchant à l'air libre, hors du pod 5, vers l'arrière en référence au sens 3. Avantageusement, comme il est illustré, on prévoit plusieurs buses 21 dont chacune comporte une vanne 22 commandée en tout ou rien et qui sont branchées en parallèle sur la conduite 20 de telle sorte qu'en ouvrant sélectivement les vannes 22, on puisse mettre en service sélectivement les buses 21 et par conséquent commander le rayonnement fourni par la composition pyrophorique lorsqu'elle est éjectée par les buses 21 ainsi mises en service ; en variante, on pourrait prévoir que les vannes 22, ou une vanne 22 unique correspondant à une buse 21 unique, soient commandées non pas en tout ou rien, mais avec possibilité de réglage du débit de composition pyrophorique à travers elles.

De préférence, comme il est illustré, en parallèle au conteneur 14 est branchée une conduite 23 qui débouche d'une part dans la conduite 12, entre le détendeur 11 et la vanne 13, à proximité immédiate de celle-ci, par une vanne 24 commandée en tout ou rien, et d'autre part dans la conduite 20, par une vanne 25 commandée en tout ou rien et située à proximité immédiate de la vanne 19, elle-même située entre cette vanne 25 et les vannes 22 des buses 21.

Les vannes 10, 13, 19, 22, 24, 25 sont de préférence unidirectionnelles; elles sont commandées, selon une séquence qui sera décrite ultérieurement, par des moyens qui consistent dans l'exemple illustré en des moyens de télécommande radio, comportant notamment un émetteur 26 généralement placé au sol et un récepteur 27 embarqué, associé à une logique de commande 28 imposant certaines modalités de fonctionnement et centralisant des informations issues de capteurs placés dans différentes zones du traceur 6 afin de commander éventuellement le fonctionnement de sécurités, comme il sera décrit plus loin ; à cet égard, le récepteur 27 est avantageusement également émetteur, et l'émetteur 26 également récepteur, de façon à transmettre au sol toute information nécessaire sur le bon fonctionnement ou les éventuels dysfonctionnements du traceur 6.

De préférence, les composants du traceur 6 désignés respectivement par les références 8 à 13, 19 à 25, 27 et 28 forment un ensemble indissociable sauf pour les opérations de maintenance, monté en tant que tel, en principe à demeure, dans le pod 5 ou directement dans l'aéronef porteur, alors que le conteneur 15 est de préférence prévu pour être aisément amovible, c'est-à-dire interchangeable, bien que solidaire des autres composants du traceur 6 lorsque celui-ci est en service.

La réalisation, à cet effet, du conteneur 14 et de moyens susceptibles de le recevoir de façon solidaire mais amovible au niveau du traceur 6, en assurant une étanchéité entre son entrée 17 et la vanne 13, d'une part, entre sa sortie 18 et la vanne 19, d'autre part, relève des aptitudes normales d'un Homme du métier qui, en outre, prévoira sur le conteneur 14 toute disposition propre à éviter une mise en contact accidentelle de la composition pyrophorique 16 avec l'air ambiant ; à cet effet, on prévoira notamment au niveau de l'entrée 17 et de la sortie 18 du conteneur 14 des bouchons détachables lors de la mise en place du conteneur 14 sur le traceur 6, protégeant des opercules étanches déchirables ou perforables lors de cette mise en place, protégeant eux-mêmes des valves unidirectionnelles s'ouvrant à la pression, dans un sens allant vers l'intérieur du conteneur 14 en ce qui concerne l'entrée 17 de celui-ci et dans un sens allant vers l'extérieur du conteneur 14 au niveau de la sortie 18 de celui-ci.

Le fonctionnement du traceur 6 va à présent être décrit en référence à une mission type, au début de laquelle le drône 1 est au sol et le traceur 6 en position dans le pod 5, à l'exception du conteneur 14 stocké par ailleurs, son entrée 17 et sa sortie 18 étant convenablement obturées par des bouchons ; le réservoir 8 est supposé empli de gaz inerte sous pression et les vannes commandées 10, 13, 18, 22, 24, 25 à l'état fermé.

Une opération préalable au décollage du drône 1 consiste à mettre en place le conteneur 14 sur le traceur 6 après avoir ôté les bouchons de l'entrée 17 et de la sortie 18 ; cette mise en place s'accompagne de la perforation des opercules mais la composition pyrophorique 16 reste isolée de l'air ambiant d'une part par les vannes 13 et 19 et d'autre part par les valves unidirectionnelles, s'ouvrant à la pression, dont sont munies l'entrée 17 et la sortie 18 du conteneur 14.

Le drône 1 peut alors décoller, après quoi un opérateur agissant sur l'émetteur 26 peut commander l'ouverture et la fermeture des vannes 10, 13, 19, 22, 24, 25 à volonté, toutefois sous le contrôle de la logique embarquée 28, notamment pour des raisons de sécurité.

A cet égard, une phase initiale de la mise en service du traceur 6 alors que le drône 1 est en vol consiste à ouvrir la vanne 10 pour introduire dans la conduite 12 le gaz inerte du réservoir 8, amené par le détendeur 11 à une pression plus faible que la pression régnant dans le réservoir 8 et par exemple de l'ordre de 0,6 à 1,5 bars, puis à ouvrir les vannes 24, 25, 22 alors que les vannes 13 et 19 restent fermées, ce qui permet au gaz inerte de chasser l'air se trouvant éventuellement dans les conduites 12, 23, 20 et dans les buses 21 et de le remplacer.

Ce n'est qu'ensuite que la logique embarquée 28 autorise l'ouverture des vannes 13, 19 et 22, de façon commandée depuis le sol au moyen de l'émetteur 26 pour provoquer l'éjection de la composition pyrophorique 16 par les buses 21.

A cet effet, les vannes 24 et 25 sont fermées alors que les vannes 13 et 19 sont ouvertes et, au choix, toutes les vannes 22 sont ouvertes ou certaines d'entre elles fermées, ce qui commande le débit global, à travers elles, de la composition pyrophorique 16 chassée du conteneur 14 par le gaz inerte introduit à l'entrée 17 de celui-ci ; naturellement, les valves s'ouvrant à la pression, équipant l'entrée 17 et la sortie 18 du conteneur 14, sont prévues pour s'ouvrir à la pression du gaz inerte dans la conduite 12 dès qu'elles sont soumises à cette pression ; l'ouverture et la fermeture sélectives des vannes 22 équipant les buses 21, ici au nombre de quatre, offrent seize possibilités de réglage du rayonnement procuré par la composition pyrophorique s'échappant des buses 21 à l'air libre et s'enflammant de ce fait immédiatement. De préférence, pour que la composition pyrophorique forme un jet proche des buses 21, la pression d'éjection de cette composition diffère peu de la pression ambiante immédiatement en arrière du pod 5 compte tenu du sens 3 ; le cas échéant, on peut prévoir de moduler la pression d'éjection de la composition pyrophorique au niveau des buses 21 en fonction de la pression immédiatement en arrière du pod 5, mesurée par un capteur de pression à ce niveau et transmise à la logique de commande 28 puis traitée par celle-ci, de façon à agir sur les vannes 22 et/ou sur une ou plusieurs des vannes 10, 13, 19.

A tout moment de l'éjection de composition pyrophorique, I'opérateur agissant au moyen de l'émetteur 26 peut modifier le débit global des buses 21, c'est-à-dire le niveau de rayonnement de la trace 7, en ouvrant ou fermant certaines vannes 22, ou arrêter l'éjection de composition pyrophorique par fermeture de l'ensemble des vannes 22, c'est-à-dire arrêter l'émission de rayonnement, puis reprendre à volonté cette émission par ouverture d'une ou plusieurs vannes 22.

Lorsque la mission est terminée et alors que le drône 1 se trouve encore en vol, I'opérateur agissant par l'intermédiaire de l'émetteur 26 initie un processus automatique, commandé par la logique de commande 28 et qui consiste à ouvrir intégralement les vannes 22 jusqu'à ce que le conteneur 14 soit intégralement vidé de la composition pyrophorique 16, puis fermer les vannes 13 et 19, puis ouvrir les vannes 24 et 25 pour purger le conduit 20 et les buses 21 de toute trace de composition pyrophorique par passage de gaz inerte en provenance du réservoir 8 ; des capteurs appropriés constatent la fin de ce processus et provoquent alors la fermeture de toutes les vannes, à savoir non seulement les vannes 13 et 19 mais également les vannes 10, 24, 25, 22, puis autorisent seulement le retour du drône 1 au sol ; les valves s'ouvrant à la pression, équipant l'entrée 17 et la sortie 18 du conteneur 14, se ferment automatiquement dès que la vanne 13 est fermée, interdisant l'accès du gaz inerte au conteneur 14.

Le conteneur 14 peut alors être démonté puis soit détruit, soit reconditionné et rechargé en composition pyrophorique 16 en vue d'une autre mission ; le réservoir 8 peut quant à lui être rechargé en gaz inerte, si nécessaire.

Comme on l'a dit plus haut, toute anomalie de fonctionnement du traceur 6 en vol se traduit de préférence par l'envoi d'un signal approprié au sol, et c'est notamment le cas si l'une des vannes 10, 13, 19, 22, 24, 25 fonctionne mal, ce qui peut soit entraîner coercitivement la mise hors service du traceur 6, par exemple si l'une des vannes 24 et 25 ne s'ouvre pas lorsqu'il s'agit de purger initialement la conduite 20 et les buses 21, soit autoriser le choix d'une séquence de fonctionnement différente de celle qui a été choisie initialement, par exemple si une panne affecte l'une des vannes 22 sans affecter les autres, soit simplement avertir l'opérateur d'un dysfonctionnement afin de lui laisser le choix entre l'arrêt de la mission ou sa poursuite sans traçage, ou encore pour l'inciter à prendre des mesures de sécurité telles que le larguage du pod 5 dans une zone déserte avant l'atterrissage du drône 1, par exemple en cas de dysfonctionnement des vannes 13 et 19 ou de blocage des vannes 22 en position de fermeture, empêchant la vidange du conteneur 14.

Naturellement, le mode de mise en oeuvre et de fonctionnement du traceur 6 qui vient d'être décrit ne constitue qu'un exemple non limitatif par rapport auquel on pourra prévoir de nombreuses variantes sans sortir pour autant du cadre de la présente invention.

## Revendications

1. Traceur (6), destiné à être embarqué sur un aéronef (1) pour créer une trace (7) le long de la trajectoire de celui-ci et comportant :
- un conteneur (14) destiné à contenir une composition traçante (16),
- une composition traçante (16) logée dans le conteneur (14),
- au moins une buse de traçage (21), raccordée au conteneur (14) et susceptible de déboucher hors de l'aéronef (1), vers l'arrière en référence à un sens déterminé (3) de vol de celui-ci.
caractérisé en ce que la composition traçante (16) est une composition pyrophorique fluide (16), en ce que la buse de traçage (21) est une buse (21) d'éjection de la composition pyrophorique (16) à l'air libre, et en ce que sont prévus des-moyens commandés d'expulsion (8, 10, 13, 19, 22), pour expulser coercitivement la composition pyrophorique (16) hors du conteneur (14), par la buse (21), de telle sorte qu'elle s'enflamme spontanément en sortant de celle-ci, et des moyens (26, 27, 28) de commande des moyens commandés d'expulsion (8, 10, 13, 19, 22).

2. Traceur selon la revendication 1, caractérisé en ce qu'il comporte un circuit (20, 22) de raccordement de la buse (21) au conteneur (14) et des moyens commandés de purge (8, 10, 24, 25), commandés par les moyens de commande (26, 27, 28), pour purger tout air du circuit (20, 22) de raccordement de la buse (21) au conteneur (14) immédiatement avant d'expulser coercitivement la composition pyrophorique (16) hors du conteneur (14).

3. Traceur selon la revendication 2, caractérisé en ce que les moyens commandés de purge (8, 10, 24, 25) comportent un réservoir (8) de gaz inerte sous pression et des moyens (10, 24, 25), commandés par les moyens de commande (26, 27, 28), pour introduire le gaz inerte sous pression dans le circuit (20, 22) de raccordement de la buse (21) au conteneur (14) immédiatement avant d'expulser coercitivement la composition pyrophorique (16) hors du conteneur (14).

4. Traceur selon l'une quelconque des revendications 1 à 3, caractérisé en ce que les moyens commandés d'expulsion et d'allumage (8, 10, 13, 19, 22) comportent un réservoir (8) de gaz inerte sous pression et des moyens (10, 13, 19, 22), commandés par les moyens de commande (26, 27, 28), pour introduire le gaz inerte sous pression dans le conteneur (14) pour en expulser coercitivement la composition pyrophorique (16).

5. Traceur selon la revendication 4, caractérisé en ce qu'il comporte, à l'intérieur du conteneur (14), des moyens (15) de séparation étanche entre le gaz inerte sous pression et la composition pyrophorique (16).

6. Traceur selon l'une quelconque des revendications 4 et 5 en combinaison avec la revendication 3, caractérisé en ce que le réservoir de gaz inerte (8) est unique et commun aux moyens commandés respectivement de purge et d'expulsion (8, 10, 13, 19, 22, 24, 25).

7. Traceur selon l'une quelconque des revendications 1 à 6, caractérisé en ce qu'il comporte des moyens commandés (22) de réglage du débit d'éjection par la buse (21), commandés par les moyens de commande (26, 27, 28).

8. Traceur selon l'une quelconque des revendications 1 à 7, caractérisé en ce qu'il comporte la buse (21) en plusieurs exemplaires et des moyens (22), commandés par les moyens de commande (26, 27, 28), pour mettre en service de façon sélective lesdits exemplaires.

9. Traceur selon l'une quelconque des revendications 1 à 9, caractérisé en ce que le conteneur (14) est amovible et interchangeable.

10. Drone (1), caractérisé en ce qu'il comporte un traceur (6) selon l'une quelconque des revendications 1 à 9, et en ce que les moyens de commande (26, 27, 28) comportent des moyens de radio-commande (26, 27).
